# EUROPEAN PATENT APPLICATION

(11) **EP 4 498 139 A1**
(43) Date of publication of application: **29.01.2025**
(21) Application number: 24189254.6
(22) Date of filing: 17.07.2024
(51) Int. Cl.: G02B 6/38

(54) **TOOL TO REMOVE DUST CAP OF FIBER CONNECTOR**

(30) Priority: 23.07.2023 US 202363515116 P; 10.06.2024 US 202418738227
(71) Applicant: Sterlite Technologies Limited, Gurugram, Haryana 122102 (IN)
(72) Inventor: Alston, Eric Emmanual, Lugoff, SC, 29078 (US)
(74) Representative: Petraz, Gilberto Luigi

(57) **Abstract**

Disclosed is a tool (104) for use with a plurality of fiber connectors (302) having one or more contours (210) that removably engage with a plurality of fiber connectors (302) thereby enabling simultaneous management of the plurality of fiber connectors (302). In particular, the one or more contours (210) has a first contour (212) and a second contour (214). The first contour (212) is defined by a plurality of protrusions (216) and a plurality of spaces (218) such that the plurality of protrusions (216) and the plurality of spaces (218) are arranged alternatively. The second contour (214) is defined by a plurality of openings (220) configured to removably and simultaneously engage with a plurality of rear tails of the fiber connectors (302).

## Description

### TECHNICAL FIELD

Embodiments of the present disclosure relate to the field of optical telecommunication systems, and more particularly, relates to a tool to remove a dust cap of a fiber connector and a method thereof.

This application claims the benefit of US Application No. "63/515,116" titled "TOOL TO REMOVE DUST CAP OF FIBER CONNECTOR" filed by the applicant on July 23, 2023, which is incorporated herein by reference in its entirety.

### BACKGROUND ART

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

With the evolution of 5G and increase of data consumption in recent years, application of data Centre's and Telecoms have increased drastically. In addition, large scale data centers and Telecom sectors require ultra-high fibre density cables which offer high data rate with low latency. The optical fiber cables are harnessed in an enclosure generally known as fiber enclosure. The fiber enclosure holds a number of fiber connectors for harnessing the optical fiber cables

As a telecommunications enclosure may include dozens or hundreds of loose, unconnected fiber optic connectors that are reserved for future connections to provide subscribers service, telecommunications enclosures typically include fiber routing guides and/or connector holders to organize the loose, unconnected fiber optic connectors and cables. This organization of the connectors and/or cables is important as it 1) enables a technician to quickly and easily find the particular connector/cable desired to be connected, 2) enables the connectors to be safely stored to minimize the likelihood of damage to the connector cable, and/or 3) allows the connectors and cables to be stored in such a way that they do not interfere with other service work the technician may need to do within the enclosure.

Some conventional telecommunications enclosures include fiber optic cables that are grouped together with tie-wraps or the like, which may not provide adequate protection to the connectors and/or dust caps. Further enclosures include connector holders that gang a group of connectors together but that are free to dangle with the cables looped around routing guides, which may not allow a technician to quickly and conveniently find the particular connector and/or connectors needed at the time.

In fiber optic telecommunications, insect-infestation can be a significant problem, especially for those types of equipment that are located in outdoor environments. In fiber optic connectivity, out of service conditions have been a result of insect-induced fiber breakage. Insects such as ants are able to enter telecommunications equipment through larger openings such as cable entry/exit points of the equipment and damage the optical fiber within the equipment. For example, in telecommunications equipment such as modules housing optical splitters, in order to accommodate a large number of split signal cables exiting the modules for subscriber connectivity, large exit openings are provided. Even when the maximum splitting capacity of a given splitter (e.g., a 1×32) is used, there might be ample room left around the exiting cables for allowing ants to enter the module.

Prior art reference US8939655B2 discloses a fiber connector organizer that has a plurality of retention members to hold a fiber connector between two adjacent retention members.

Another prior art reference US8824850B2 discloses a cable manager with plurality of cut-outs. The cable manager is mounted in a fiber module housing to prevent insect infestation.

Yet another prior art references US2008298764A1 and US2007025674A1 discloses about a connector holder for holding plurality of optical fiber connector at front face of an enclosure.

However, there are a number of drawbacks of the conventional connectors of optical fiber cables in the above stated prior arts such as these conventional connectors are not able to perform one or more functions that are required in installation of the optical fibers in an enclosure.

Thus, the present disclosure proposes a technical solution that overcomes the above-stated limitations in the prior arts by providing a tool having one or more contours that removably engage with the plurality of fiber connectors thereby enabling simultaneous management of the plurality of fiber connectors.

### SUMMARY OF THE DISCLOSURE

Embodiments of the present disclosure relates to a tool for use with a plurality of fiber connectors) comprising one or more contours that removably engage with the plurality of fiber connectors thereby enabling simultaneous management of the plurality of fiber connectors. In particular, the one or more contours has a first contour defined by a plurality of protrusions and a plurality of spaces that are arranged alternatively. Moreover, the first contour is configured to removably and simultaneously engage with a plurality of dust caps of the plurality of fiber connectors thereby enabling simultaneous disengagement and/or engagement of the plurality of dust caps by application of an external force. Further, the one more or more contours has a second contour is defined by a plurality of openings configured to removably and simultaneously engage with a plurality of rear tails of the fiber connectors thereby enabling simultaneous insertion of the fiber connectors in one or more adapters by application of an external force.

According to the first aspect of the present disclosure, each protrusion of the plurality of protrusions has a width in a range of 0.105 inches to 0.50 inches.

According to the second aspect of the present disclosure, each space of the plurality of spaces has a width in a range of 0.105 inches to 0.130 inches.

According to the third aspect of the present disclosure, the plurality of protrusions has proximal and distal ends such that each protrusion of the plurality of protrusions has a variable thickness between the proximal and distal ends.

According to the fourth aspect of the present disclosure, each of the plurality of openings are circular in shape and a distance between a pair of adjacent openings of the plurality of openings is in a range of 0.250 inches to 0.50 inches.

According to the fifth aspect of the present disclosure, the tool further comprises first and second long sides parallel to each other and first and second short sides connecting the first and second long sides to form a rectangular shape.

According to the sixth aspect of the present disclosure, the first and second contours are disposed over at least one of the first and second long sides.

According to the seventh aspect of the present disclosure, the tool further comprising first and second alignment flanges disposed at the first and second short sides respectively, and adapted to align the tool inside an enclosure for removal of the one or more dust caps and/or insertion of the fiber connectors.

According to the eighth aspect of the present disclosure, the plurality of openings has first and second ends such that each opening of the plurality of openings has a variable inner diameter between the first and second ends to grasp the one or more rear tails of the fiber connectors. Further, the plurality of openings has one or more tabs at the one end to prevent twisting of the one or more connectors as each of the connectors include a pull tab such that the pull tab is retained between two adjacent tabs of the one or more tabs.

Another aspect of the present disclosure provides a method for managing a plurality of fiber connectors using a tool comprising steps of
engaging one or more fiber connectors of the plurality of fiber connectors with the tool) by applying an external force; and
performing exactly one of the functions where the functions include:
   (i) removing one or more dust caps coupled to the one or more connectorsand
   (ii) engaging the one or more fiber connectors to one or more adapters .

The step of removing of the one or more dust caps coupled to the one or more connectors (302) further comprises
(i) grasping the one or more dust caps with a first contour created between two adjacent protrusions of the plurality of protrusions of the tool, and
(ii) pulling out the one or more dust caps by applying an external force.

The step of engaging of the one or more connectors to one or more adapters further includes receiving rear tails of the one or more connectors with a second contour formed by the plurality of openings of the tool and pushing the one or more connectors) inside the one or more adapters by applying an external force.

The foregoing objectives of the present disclosure are attained by providing a tool for insertion of a plurality of fiber connectors simultaneously and a method thereof.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an enclosure for plurality of optical fiber connectors in accordance with an embodiment of the present disclosure;
Fig. 2 is a pictorial snapshot illustrating a perspective view of the tool of the enclosure in accordance with an embodiment of the present disclosure;
Fig. 3A is a pictorial snapshot illustrating a perspective view of the tool of the enclosure for holding a plurality of fiber connectors in accordance with an embodiment of the present disclosure;
Fig. 3B is a pictorial snapshot illustrating a perspective view of the tool of the enclosure for simultaneously inserting a plurality of connectors into adapters in accordance with an embodiment of the present disclosure;
Fig. 4A and Fig. 4B are pictorial snapshots illustrating a perspective view of the tool of the enclosure for simultaneously removing a plurality of dust caps of each of the plurality of fiber connectors in accordance with an embodiment of the present disclosure;
Fig. 5 is a pictorial snapshot illustrating a side view of the tool of the enclosure for holding a dust cap of each of the plurality of fiber connectors in accordance with an embodiment of the present disclosure;
Fig. 6 is a pictorial snapshot illustrating a side view of a connector with first and second tools for removing a dust cap and for holding a connector, respectively in accordance with an embodiment of the present disclosure;
Fig. 7 is a flowchart illustrating a method for managing a plurality of fiber connectors using the tool in accordance with an embodiment of the present disclosure.

The tool and enclosure is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
The term "optical fiber" as used herein refers to a light guide that provides high-speed data transmission. The optical fiber has one or more glass core regions and a glass cladding region. The light moving through the glass core regions of the optical fiber relies upon the principle of total internal reflection. The glass core regions have a higher refractive index (n1) than the refractive index (n2) of the glass cladding region of the optical fiber.

The term "optical fiber cable" as used herein refers to a cable that encloses a plurality of optical fibers.

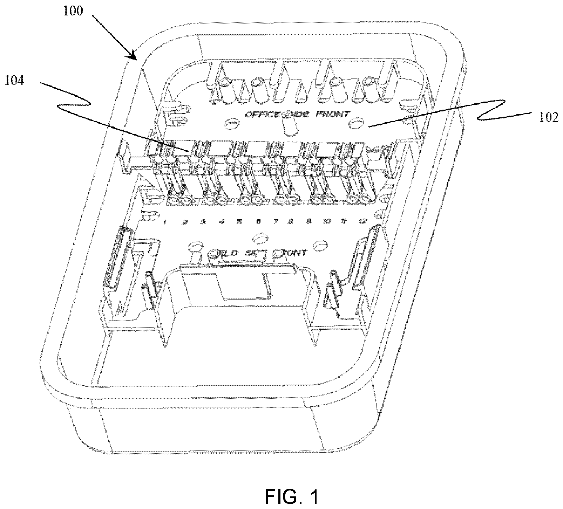

Fig. 1 is a pictorial snapshot illustrating an enclosure for plurality of optical fiber connectors in accordance with an embodiment of the present disclosure. An enclosure 100 for a plurality of optical fiber connectors (hereinafter collectively referred to as "the fiber connectors") may be adapted to hold the fiber connectors. In particular, the fiber connectors may be adapted to hold or accommodate a plurality of optical fiber cables such that each optical fiber cable is provided with a plurality of optical fibers. Moreover, the enclosure 100 may be adapted to protect the fiber connectors from external factors such as environmental factors. Further, the enclosure 100 may facilitate easy harness of the fiber connectors.

The enclosure 100 may have a connector tray 102 and a tool 104. The connector tray 102 may facilitate forming a base that may allow one or more components in the enclosure 100. Moreover, the connector tray 102 may be adapted to hold the tool 104. The tool 104 may be disposed of on the connector tray 102. Further, the tool 104 may be removably disposed on the connector tray 102.

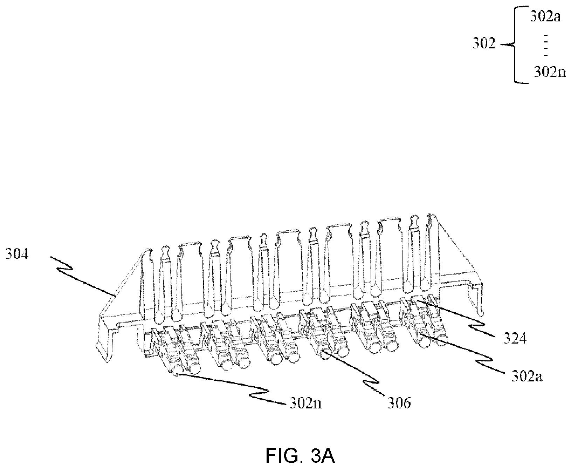

In some preferred aspects of the present disclosure, the tool 104 may be placed on the connector tray 102 without fixing the tool 104 on the connector tray 102. In particular, the tool 104 may be designed in a manner that the tool 104 may be used to connect the fiber connectors to their respective adapters in one go. Further, the tool 104 may be designed in a manner that the tool 104 may be used to remove a dust cap 306 (as shown in Fig. 3A) of each fiber connector of the fiber connectors in one go.

In accordance with an embodiment of the present disclosure, the tool 104 may have a comb-like shape that may facilitate the tool 104 to hold the fiber connectors and to remove the dust cap 306 of each fiber connector of the fiber connectors. In particular, the tool 104 may be movably arranged in the enclosure 100. Moreover, the tool 104 may be movably arranged in the enclosure 100 to remove the dust cap 306 of the fiber connectors from one side of the tool 104 and to hold the fiber connectors from another side of the tool 104. Further, the tool 104 may be made up of a material, including but not limited to, a plastic. Aspects of the present disclosure are intended to include and/or otherwise cover any type of material for the tool 104, without deviating from the scope of the present disclosure.

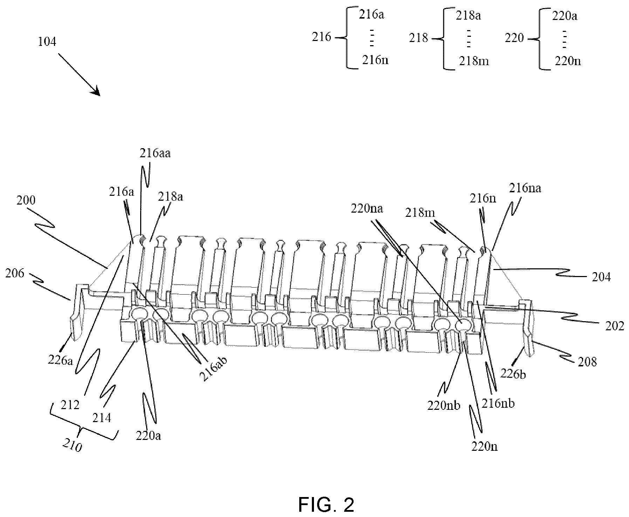

Fig. 2 is a pictorial snapshot illustrating a perspective view of the tool 104 of the enclosure 100 in accordance with an embodiment of the present disclosure. The tool 100 may be disposed within the enclosure 100 and facilitate insertion of one or more fiber connectors simultaneously. Advantageously, the tool 104 may facilitate to hold the one or more fiber connectors intact in the enclosure 100.

In accordance with an embodiment of the present disclosure, the tool 104 may have a body 200 may have a first long side 202 and a second long side 204 disposed parallel to each other. In particular, the tool 104 may have first and second short sides 206 and 208 connecting the first and second long sides 202 and 204 to form a rectangular shape. Moreover, the tool 100 may have a set of one or more contours 210 that may be adapted to removably engage with the fiber connectors 302 (as shown later in Fig. 3A) thereby enabling simultaneous management of the fiber connectors 302. It should be noted that the set of one or more contours 210 may have any numbers of one or more contours that may depend on requirement. However, to keep the explanation concise only one of the set of one or more contours 210 is discussed. It will be apparent to a person of ordinary skill in the art that each of the one or more contours of the set of one or more contours 210 serve the same functionality as will be discussed in relation to one of the one or more contours of the set of one or more contours 210.

In accordance with an embodiment of the present disclosure, the one more or more contour 210 of the tool 100 has two contours i.e., a first contour 212 and a second contour 214. In some aspects of the present disclosure, the first and second contours 212 and 214 may be disposed over at-least one of the first and second long sides 202 and 204.

In an exmplary example, the first and second contours 212 and 214 of the tool 104 are disposed over the first long side 202. However, in an alternate aspect of the present disclosure, the first and second contours 212 and 214 of the tool 104 can be disposed over the second long side 204 as well, without deviating from the scope of the present disclosure.

The first contour 212 may be defined by a plurality of protrusions 216a-216n (hereinafter interchangeably referred to and designated as "the plurality of protrusions 216") and a plurality of spaces 218a-218m (hereinafter interchangeably referred to and designated as "the plurality of spaces 218"). Further, the plurality of protrusions 216a-216n and the plurality of spaces 218a-218m are arranged alternatively. Alternatively, the first contour 212 may be configured to removably and simultaneously engage with a plurality of dust caps 306 (as shown later in Fig. 3A) of the fiber connectors 302 thereby enabling simultaneous disengagement and/or engagement of the plurality of dust caps 306 by application of an external force.

Each protrusion of the plurality of protrusions 216a-216n may have proximal ends 216aa-216na and distal ends 216ab-216nb, respectively. In particular, each protrusion of the plurality of protrusions 216a-216n may have a variable thickness between the proximal ends 216aa-216na and distal ends 216ab-216nb. Moreover, each protrusion of the plurality of protrusions 216a-216n may have one flat surface and one inclined surface that may be defined by the variable thickness between the 216aa-216na and distal ends 216ab-216nb of the plurality of protrusions 216a-216n, respectively.

Further, each protrusion of the plurality of protrusions 216 may have a width in a range of 0.105 inches to 0.50 inches. In other words, each of the protrusions of the plurality of protrusions 216 may have a width in the range of 0.105 inches to 0.50 inches.

In accordance with an embodiment of the present disclosure, each space of the plurality of spaces 218 may have a width in a range of 0.105 inches to 0.130 inches.

In accordance with an embodiment of the present disclosure, the second contour 214 may be defined by a plurality of relief openings 220a-220n (hereinafter interchangeably referred to and designated as "the openings 220"). The openings 220 may be configured to removably and simultaneously engage with a plurality of rear tails (not shown) of the fiber connectors 302 thereby enabling simultaneous insertion of the fiber connectors 302 in the adapters 308 by application of an external force.

The first long side 204 may have the openings 220 such that the openings 220 may be adapted to hold one or more rear tails of the fiber connectors. In particular, each opening of the openings 220 may be adapted to hold a rear tail of each fiber connector of the fiber connectors 302. Further, each opening of the openings 220 may be adapted to hold the rear tail of each fiber connector of the fiber connectors 220 to simultaneously insert the fiber connectors in the enclosure 100.

In accordance with an embodiment of the present disclosure, each of the plurality of openings 220 may be circular in shape. Further, a distance between a pair of adjacent openings of the plurality of openings 220 may be in a range of 0.250 inches to 0.50 inches.

In some aspects of the present disclosure, each opening of the plurality of openings 220a-220n may have may have first ends 220aa-220na and second ends 220ab-220nb such that each opening of the plurality of openings 220 has a variable inner diameter between first ends 220aa-220na and second ends 220ab-220nb to grasp the one or more rear tails of the fiber connectors 302. Further, by virtue of the variable inner diameter between the first ends 220aa-220na and second ends 220ab-220nb of each of the plurality of openings 220, each opening of the plurality of openings 220 may have a conical shape.

In some aspects of the present disclosure, each opening of the plurality of openings 220 may have one or more tabs 324 (as shown in Fig. 3A) at one end to prevent twisting of the fiber connectors 302. Further, each of the fiber connectors 302 may have a pull tab (not shown) such that the pull tab is retained between two adjacent tabs of the one or more tabs 324 to fixedly hold the fiber connectors 302 therein.

In accordance with an embodiment of the present disclosure, the tool 104 further has first and second alignment flanges 226a and 226b disposed at the first and second short sides 206 and 208, respectively. In particular, the first and second alignment flanges 226a and 226b may extend from the first and second short sides 206 and 208, respectively. Moreover, the first and second alignment flanges 226a and 226b may be adapted to align the tool 104 inside the enclosure 100 for removal of one or more dust caps 306 and/or insertion of the fiber connectors 302.

Fig. 3A is a pictorial snapshot illustrating a perspective view of the tool 104 of the enclosure 100 for holding a plurality of fiber connectors 302a-302n (hereinafter collectively referred to and designated as "the fiber connectors 302"). Each fiber connector of the fiber connectors 302 may have a rear tail 304 and a dust cap 306.

In accordance with an embodiment of the present disclosure, the tool 104 may hold the fiber connectors 302. In particular, the tool 104 may be adapted to hold the rear tail 304 of the fiber connectors 302. Each opening of the openings 220 may hold the rear tail 304 of each fiber connector of the fiber connectors 302. Simultaneously, to hold the fiber connectors 302 the rear tail 304 of each fiber connector of the fiber connectors 302 may be inserted in each opening of the openings 220.

In some aspects of the present disclosure, each opening of the plurality of openings 220 may have one or more tabs 324 at one end to prevent twisting of the fiber connectors 302. In particular, each of the fiber connectors 302 may have a pull tab (not shown) such that the pull tab is retained between two adjacent tabs of the one or more tabs 324 (as shown in FIG. 3A) to fixedly hold the fiber connectors 302 therein. Moreover, the plurality of protrusions 216 and the plurality of spaces 218 are configured to removably and simultaneously engage with the plurality of dust caps 306 of the fiber connectors 302 thereby enabling simultaneous disengagement and/or engagement of the plurality of dust caps 306 by application of an external force.

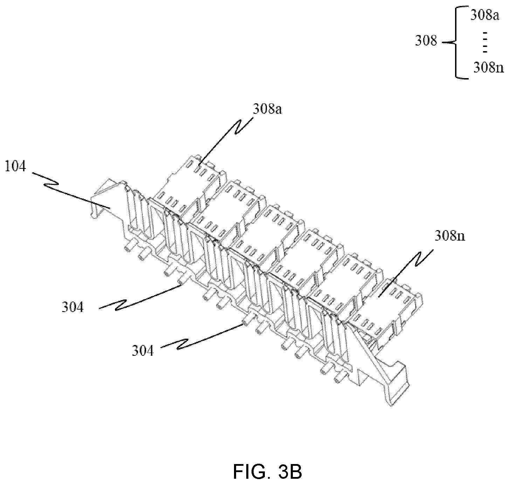

Fig. 3B is a pictorial snapshot illustrating a perspective view of the tool of the enclosure for simultaneously inserting a plurality of connectors into adapters in accordance with an embodiment of the present disclosure. The tool 104 of the enclosure 100 simultaneously inserts the fiber connectors 302 into a plurality of adapters 308a-308n (hereinafter collectively referred to and designated as "the adapters 308"). In particular, the adapters 308 may be fixed on the connector tray 102. And, the fiber connectors 302 may be simultaneously inserted into the adapters 308. Further, the tool 104 may advantageously facilitate inserting the fiber connectors 302 in the adapters 308.

In some aspects of the present disclosure, the first long side 202 of the tool 104 may be adapted to hold the fiber connectors 302 to insert each fiber connector of the fiber connectors 302 in corresponding adapters of the adapters 308.

Further, each adapter of the adapters 308 may be mounted on the connector tray 102 inside the enclosure 100.

The tool 104 may hold the rear tail 304 of each fiber connector of the fiber connectors 302 into the openings 220. Particularly, the tool 104 may hold the rear tail 304 of each fiber connector of the fiber connectors 302 into the openings 220 by moving in a perpendicular direction to the connector tray 102.

In some aspects of the present disclosure, each fiber connector of the fiber connectors 302 may be inserted in the corresponding adapter of the adapters 308. In particular, each fiber connector of the fiber connectors 302 may be inserted in the corresponding adapter of the adapters 308 by lateral movement of the corresponding adapter of the adapters 308 parallel to the connector tray 102. Further, each fiber connector of the fiber connectors 302 may be a Lucent connector (LC) and a square connector (SC).

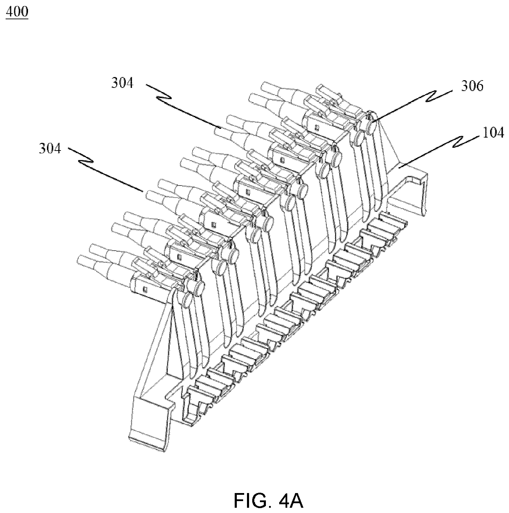

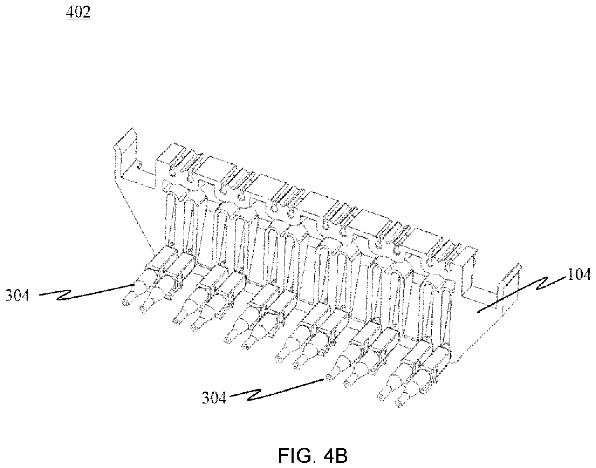

Fig. 4A and Fig. 4B are pictorial snapshots illustrating a perspective view 400 and 402 of the tool 104 of the enclosure 100 for simultaneously removing a plurality of dust caps of each of the plurality of fiber connectors in accordance with an embodiment of the present disclosure. In particular, the dust cap 306 may be a component that may be adapted to cover all the contact surfaces of a fiber connector of the fiber connectors 306 and an adapter of the adapters 308. Moreover, the dust cap 306 of each fiber connector of the fiber connectors 302 may be held at the second long side 206. Further, the dust cap 306 of each fiber connector of the fiber connectors 302 may be removed in the protrusions 210. To remove the dust cap 306, the dust cap 306 of each fiber connector of the fiber connectors 302 may be inserted in the protrusions 216. Specifically, the dust cap 306 of each fiber connector of the fiber connectors 302 may be inserted in a pair of adjacent protrusions of the protrusions 216. Further, the pair of adjacent protrusions of the protrusions 216 may be adapted to remove the dust cap 306 of each fiber connector of the fiber connectors 302.

In accordance with an embodiment of the present disclosure, the second long side 204 may remove the dust cap 306 of each fiber connector of the fiber connectors 302. Further, the pair of adjacent protrusions of the protrusions 216 may remove the dust cap 306 of each fiber connector of the fiber connectors 302 by moving each fiber connector of the fiber connectors 302 in a perpendicular direction to the connector tray 102.

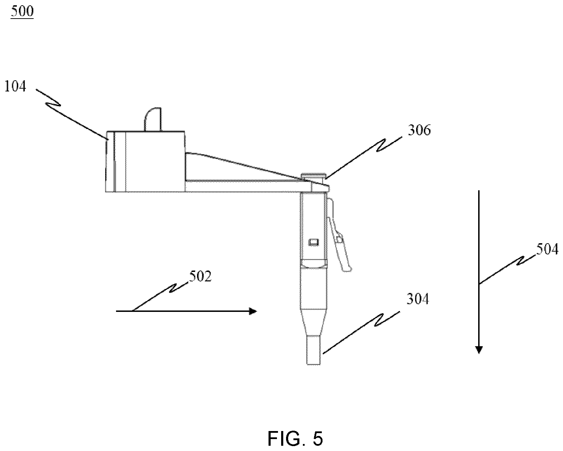

Fig. 5 is a pictorial snapshot illustrating a side view of the tool 104 of the enclosure 100 for holding a dust cap of each of the plurality of fiber connectors in accordance with an embodiment of the present disclosure. In particular, movement of the tool 104 in a direction that facilitates removing the dust cap 306 of each fiber connector of the fiber connectors 302. To remove the dust cap 306 of each connector of the fiber connectors 302, each fiber connector of the fiber connectors 302 may be moved in the first direction 502. Moreover, to remove the dust cap 306 of each fiber connector of the fiber connectors 302, the tool 104 may be moved in a lateral direction that may be parallel to the connector tray 102. Further, to remove the dust cap 306 of each fiber connector of the fiber connectors 302, the tool 104 may be moved in a second direction 504.

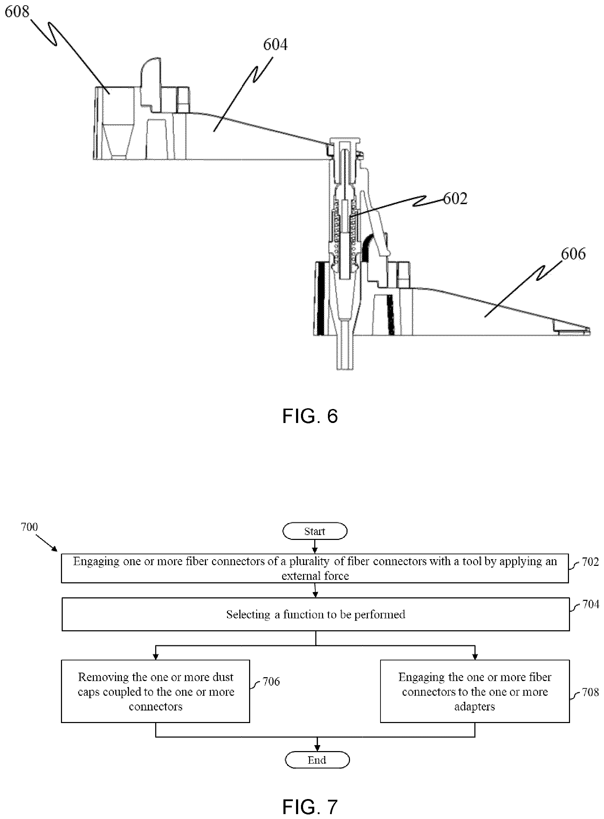

Fig. 6 is a pictorial snapshot illustrating a side view of a connector with first and second tools 604 and 606 for removing a 306 and for holding the connector 602 respectively in accordance with an embodiment of the present disclosure. The connector 602 that may be held within the first tool 604 and the second tool 606. In particular, the first and second tools 604 and 606 may be the same or substantially similar to tool 104 in terms of structural and functional aspects. For sake of brevity, elements of the first and second tools 604 and 606 that are similar to the elements of the tool 104 are referenced with the like reference numerals as referred for the tool 104.

The connector 602 may be the same or substantially similar to each fiber connector of the fiber connectors 302 in terms of structural and functional aspects. For sake of brevity, like elements of the connector 602 that are similar to the elements of each fiber connector of the fiber connectors 302 are referenced with the like reference numerals as referred for each fiber connector of the fiber connectors 302.

The first tool 604 may be adapted to hold the dust cap 306 of the connector 602. The pair of adjacent protrusions of the protrusions 210 may be adapted to hold the dust cap 306 of the connector 602. Further, the second tool 606 may be adapted to hold the rear tail 304 of the connector 602.

Fig. 7 is a flowchart illustrating a method for managing a plurality of fiber connectors using the tool in accordance with an embodiment of the present disclosure.

At step 702, one or more fiber connectors of the plurality of fiber connectors 302 may be engaged with the tool 104 by applying an external force.

At step 704, exactly one function may be selected from a fist function and a second function. In particular, when the fist function is selected, the method 700 may proceed to a step 706, otherwise, when the second function is selected, the method 700 may proceed to a step 708.

At step 706, the one or more dust caps 306 coupled to the one or more connectors 302 may be removed. In particular, to remove the one or more dust caps 306 coupled to the one or more connectors 302. Moreover, the one or more dust caps 306 may be grasped with the first contour 212 created between two adjacent protrusions of the plurality of protrusions 216 of the tool 104. And the one or more dust caps 306 may be pulled out by applying an external force.

At step 708, the one or more fiber connectors 302 may be engaged to the one or more adapters 308. Particularly, to engage the one or more connectors 302 to one or more adapters 308, the rear tails of the one or more connectors 302 may be received within the second contour 214 formed by the plurality of openings 220 of the tool 104 and the one or more connectors 302 may be pushed inside the one or more adapters 308 by applying an external force.

Advantageously, the tool 104 facilitates simultaneously removal the dust cap 306 from all the fiber connectors 302. Since, tool 104 facilitates simultaneous removal of the dust cap 306 from all the fiber connectors 302, therefore, the effort of removing the dust cap 306 individually from all the fiber connectors 302 is drastically reduced. Further, the tool 104 may facilitate simultaneous insertion of the rear tail 304 of all the fiber connectors 302 and hence reduces installation time for the fiber connectors 302. Since, the tool 104 facilitates simultaneous insertion of the adapters 308, therefore, effort of inserting the adapters 308 individually is drastically reduced. Furthermore, the tool 104 may facilitate the maintenance of the fiber connectors 302 in an organized manner on the connector tray 102.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A tool (104) for use with a plurality of fiber connectors (302), wherein the tool (104) comprising:
one or more contours (210) that removably engage with the plurality of fiber connectors (302) thereby enabling simultaneous management of the plurality of fiber connectors (302).

2. The tool (104) of claim 1, wherein the one or more contours (210) has a first contour (212) defined by a plurality of protrusions (216) and a plurality of spaces (218) such that the plurality of protrusions (216) and the plurality of spaces (218) are arranged alternatively,
wherein the first contour (212) is configured to removably and simultaneously engage with a plurality of dust caps (306) of the plurality of fiber connectors (302) thereby enabling simultaneous disengagement and/or engagement of the plurality of dust caps (306) by application of an external force.

3. The tool (104) of claim 2, wherein each protrusion of the plurality of protrusions (216) has a width in a range of 0.105 inches to 0.50 inches.

4. The tool (104) of claim 2, wherein each space of the plurality of spaces (218) has a width in a range of 0.105 inches to 0.130 inches.

5. The tool (104) of claim 1, wherein the plurality of protrusions (216) has proximal and distal ends (216aa-216na, 216ab-216nb) such that each protrusion of the plurality of protrusions (216) has a variable thickness between the proximal and distal ends (216aa-216na, 216ab-216nb).

6. The tool (104) of claim 1, wherein the one more or more contours (210) has a second contour (214) defined by a plurality of openings (220) configured to removably and simultaneously engage with a plurality of rear tails of the fiber connectors (302) thereby enabling simultaneous insertion of the fiber connectors (302) in one or more adapters (308) by application of an external force.

7. The tool (104) of claim 6, wherein each of the plurality of openings (220) are circular in shape and a distance between a pair of adjacent openings of the plurality of openings (220) is in a range of 0.250 inches to 0.50 inches.

8. The tool (104) of claim 1 ,wherein the tool (104) further comprising first and second long sides (202, 204) parallel to each other and first and second short sides (206, 208) connecting the first and second long sides (202, 204) to form a rectangular shape.

9. The tool (104) of claim 1, wherein the first and second contours (212, 214) are disposed over at least one of the first and second long sides (202, 204).

10. The tool (104) of claim 1 ,wherein the tool (104) further comprising first and second alignment flanges (226a, 226b) disposed at the first and second short sides (206, 208), respectively, and adapted to align the tool (104) inside an enclosure (100) for removal of the one or more dust caps (306) and/or insertion of the fiber connectors (302).

11. The tool (104) of claim 6, wherein the plurality of openings (220) has first and second ends (220aa-220na, 220ab-220nb) such that each opening of the plurality of openings (220) has a variable inner diameter between the first and second ends (220aa-220na, 220ab-220nb) to grasp the one or more rear tails of the fiber connectors (302).

12. The tool (104) of claim 6, wherein the plurality of openings (220) has one or more tabs (324) at the one end to prevent twisting of the one or more connectors (302) as each of the connectors include a pull tab such that the pull tab is retained between two adjacent tabs of the one or more tabs (324).

13. A method (700) for managing a plurality of fiber connectors (302) using a tool (104), wherein the method (700) comprising:
engaging one or more fiber connectors of the plurality of fiber connectors (302) with the tool (104) by applying an external force; and
performing exactly one of the functions wherein the functions include:
(i) removing one or more dust caps (306) coupled to the one or more connectors (302) and
(ii) engaging the one or more fiber connectors (302) to one or more adapters (308).

14. The method (700) of claim 13, wherein for the removing of the one or more dust caps (306) coupled to the one or more connectors (302), the method (700) further includes:
(i) grasping the one or more dust caps (306) with a first contour (212) created between two adjacent protrusions of the plurality of protrusions (216) of the tool (104); and
(ii) pulling out the one or more dust caps (306) by applying an external force.

15. The method (700) of claim 13, wherein for the engaging of the one or more connectors (302) to one or more adapters (308), the method (700) further includes:
receiving rear tails of the one or more connectors (302) with a second contour (214) formed by the plurality of openings (220) of the tool (104) and
pushing the one or more connectors (302) inside the one or more adapters (308) by applying an external force.
